# EUROPEAN PATENT SPECIFICATION

(11) **EP 0 987 688 B1**
(45) Date of publication and mention of the grant of the patent: **01.07.2009**
(21) Application number: 98308915.2
(22) Date of filing: 30.10.1998
(51) Int. Cl.: G11B 7/09

(54) **Pickup actuator**
Einrichtung zur Bewegung eines Aufnahmekopfes
Actionneur pour déplacer une tête de lecture

(30) Priority: 17.09.1998 KR 9838450; 10.10.1998 KR 9842385; 10.10.1998 KR 9842386; 10.10.1998 KR 9842387; 26.10.1998 KR 9844822
(43) Date of publication of application: 22.03.2000
(73) Proprietor: SAMSUNG ELECTRONICS CO., LTD., Suwon-City, Kyungki-do (KR)
(72) Inventor: Shin, Kyung-Sik, Jukjeon-ri, Yongin-city, Kyungki-do (KR)
(74) Representative: Robinson, Ian Michael

(56) References cited:
- EP-A- 0 322 462
- EP-A- 0 358 294
- EP-A- 0 371 799
- EP-A- 0 419 097
- US-A- 4 479 051
- US-A- 4 818 066
- US-A- 5 147 573
- US-A- 5 506 732
- US-A- 5 566 149
- US-A- 5 604 641
- US-A- 5 646 789
- FERROFLUIDICS CORPORTION: "CD/DVD-ROM Drives - Ferrofluid in optical disc pickup actuators" PRODUCTS - SPECIALITY FLUID APPLICATIONS, [Online] XP002157869 Retrieved from the Internet: <URL:216.204.4.40/cddvd.htm> [retrieved on 2001-01-18]
- PATENT ABSTRACTS OF JAPAN vol. 014, no. 183 (P-1035), 12 April 1990 (1990-04-12) & JP 02 029937 A (MITSUBISHI ELECTRIC CORP), 31 January 1990 (1990-01-31)
- PATENT ABSTRACTS OF JAPAN vol. 014, no. 321 (P-1074), 10 July 1990 (1990-07-10) & JP 02 103739 A (MITSUBISHI ELECTRIC CORP), 16 April 1990 (1990-04-16)

## Description

The present invention relates to a pickup actuator employed into an optical device for recording/reproducing an information on/from an optical disc by using an optical means.

A field of optical means for recording/reproducing an information on/from information recording medium such as an optical disc is already in the limelight as a new technique of the coming era. Especially, a pickup actuator is considered as an important component of the optical device, since it determines the speed of recording/reproducing of information. Such pickup actuator schematically comprises a base member, a lens holder, and a lens holder driving means. The lens holder is movably disposed with respect to the base member. An objective lens is mounted on the lens holder. The objective lens projects a light beam to a recordable side of the optical disc to read the optical signal, or record the information on the optical disc. The lens holder driving means drives the lens holder toward directions of focusing and tracking.

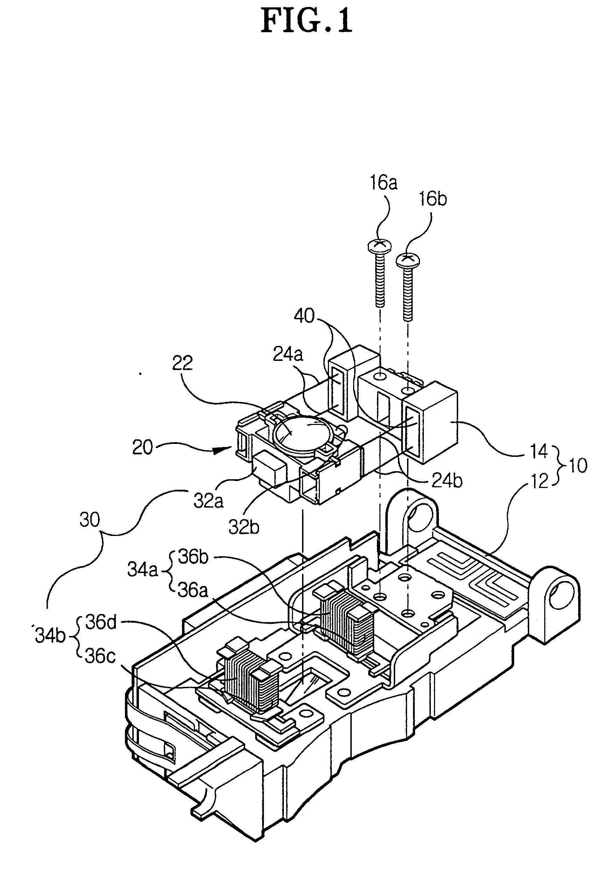

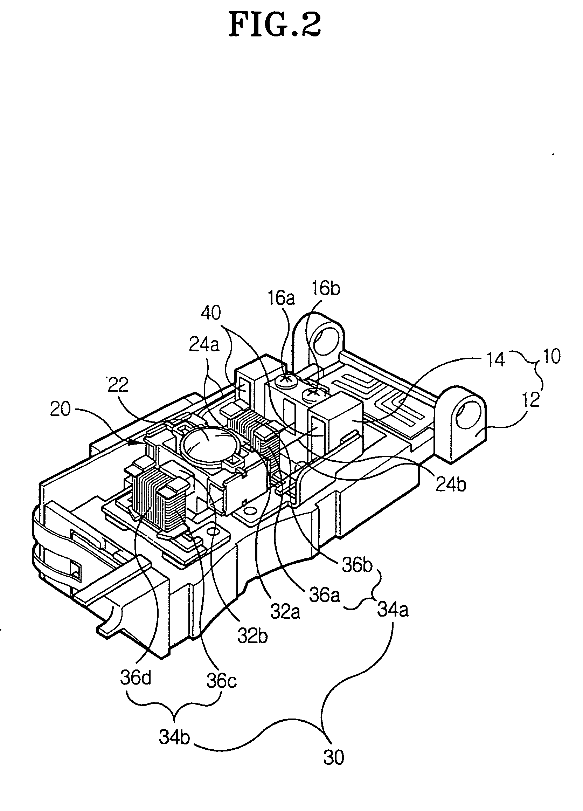

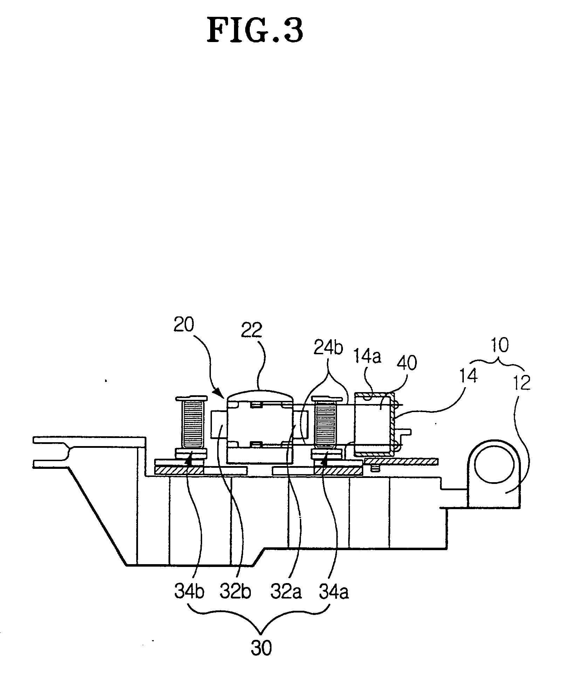

An example of such a pickup actuator is shown in FIGs. 1 to 3. Figure 1 is an exploded perspective view showing a conventional pickup actuator, Figure 2 is a perspective view showing the pickup actuator assembled, and Figure 3 is a sectional view for showing a main portion of the pickup actuator shown in Figure 2.

As shown in Figures 1 to 3, a base member 10 comprises a body portion 12 and a holder supporting portion 14. The holder supporting portion 14 is attached to an upper side of the body portion 12 by a pair of screws 16a and 16b.

Additionally, an objective lens 22 is mounted on a lens holder 20. The lens holder 20 is suspended at the holder supporting portion 14 of the base member 10 by two pairs of wire springs 24a and 24b. Thus, the lens holder 20 is capable of being moved in directions of focusing and tracking.

A lens holder driving means 30 comprises a pair of magnets 32a and 32b, and a pair of driving coils 34a and 34b. The magnets 32a and 32b are respectively attached to both sides of the lens holder 20, and form a magnetic circuit. The driving coils 34a and 34b are disposed at the body portion 12 of the base member 10, while facing each other and being spaced from the respective magnets 32a and 32b at a predetermined distance. The two driving coils 34a and 34b respectively have a pair of focusing coils and a pair of tracking coils 36a, 36b, and 36c, 36d which are wound in a perpendicular fashion with respect to each other.

In a conventional pickup actuator constructed as above, the focusing and tracking of the objective lens 22 are performed by moving the magnets 32a and 32b, i.e. the lens holder 20 toward the directions of focusing and tracking. Such moving of the lens holder 20 is performed by controlling the direction and intensity of electric currents flowing through the focusing and tracking coils 36a, 36c, 36b, and 36d.

The above conventional pickup actuator, however, has a drawback as follows. Since the lens holder 20 is suspended at the holder supporting portion 14 by a pair of wire springs 24a and 24b, during the focusing and tracking of the objective lens 22, a lot of time is taken for the objective lens 22 to reach the designated spot and be settled therein.

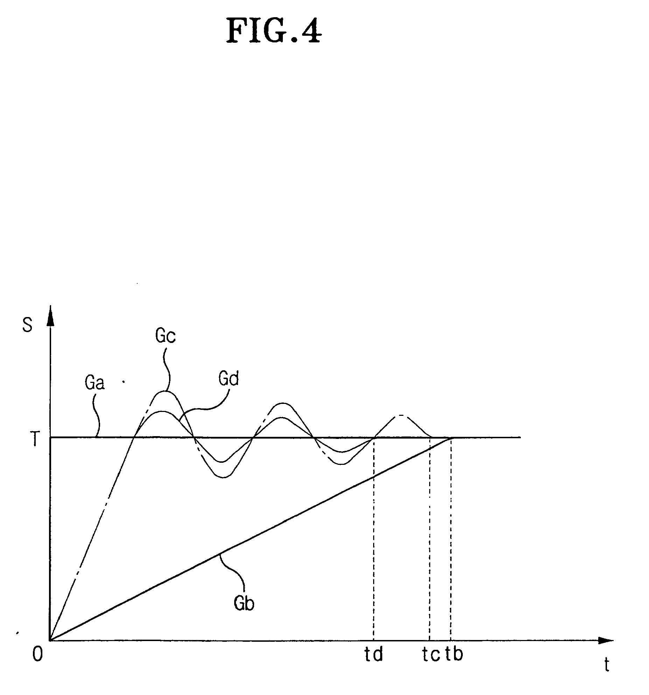

Above will be described in greater detail with respect to Figure 4. As shown in Figure 4, Y-axis ("S") is a distance that the objective lens 22 is supposed to be moved to be settled in the designated spot, and an X-axis ("t") is a time taken for the objective lens 22 to reach the designated spot and be settled therein.

"Ga" in Figure 4 is a line for indicating an ideal movement of the objective lens 22. In this case, it takes "0" (zero) second for the objective lens 22 to reach the designated spot "T" and be settled therein. However, this is impossible because the objective lens 22 would need to have a speed reaching an infinite value in an instant, to be moved to the "T".

"Gb" in Figure 4 is a line for indicating an actual movement of the objective lens 22. In this case, it takes time "t_{b}" for the objective lens 22 to reach the "T" and be settled therein.

If the objective lens 22 is moved at a greater speed to shorten the time "t_{b}", the time can be shortened to "t_{c}", however, there inevitably occurs the vibration of the objective lens 22 until the objective lens 22 is settled in the "T".

As described, the greater speed the moving objective lens 22 has, the greater vibration the objective lens 22 has. However, if the vibration could be efficiently damped, the objective lens 22 could be settled in the "T" more rapidly.

In the past, it has been suggested that a damper bond 40 in a gel state be injected into the inner portion of the holder supporting portion 14 in order to damp the vibration. Due to the presence or die damper bond 40, the vibration transmitted through the wire springs 24a and 24b are damped more rapidity. (Ref. "Gd" line in Figure 4)

Despite the damper bond 40, however, there is a limit to increasing the speed of the focusing and tracking operation of the objective lens 22, since the vibration occurring at the lens holder 20 is damped by die damper bond 40 only after the vibration has been transmitted through the wire springs 24a and 24b to the damper bond 40.

Particularly when the optical device is employed into the automobiles which have intensive outside vibrations, or when a physical shock is imparted to the optical device, the vibration occurring at the lens holder 20 is not quickly damped, and there occurs a mis-function of the optical device.

Further, the damper bond 40 has to be injected into an inner space 14a defined within the holder supporting portion 14 from a side thereof. Thus, the injecting of the damper bond 40 itself is a complex process, which deteriorates a productivity of the optical pickup device.

In addition, after injecting the damper bond 40, the damper bond 40 has to be solidified to some degree by ultraviolet rays radiated thereto. Thus, a manufacturing process of the optical pick device becomes more complex, and a manufacturing cost thereof accordingly increases.

EP 0 371 799 discloses an objective lens driving apparatus. Viscoelastic substances are gelled into place in magnetic gaps to achieve a damping effect. US 4 479 051 shows a magnetic fluid being used with an objective lens when the lens is moving in a tracking direction.

Both EP0 371 799 and US 4 479 051 are falling under the terms of the preamble of appended claim 1.

The present invention has been made with a view to overcome above-described problems, and accordingly, it is an aim of embodiments of the present invention to provide a pickup actuator capable of damping a vibration occurring at a lens holder during a focusing and tracking of an objective lens, thus moving the objective lens to a designated spot rapidly.

Another aim of embodiments of the present invention is to provide a pickup actuator capable of rapidly damping a vibration occurring at a lens holder caused by an outside vibration or shock, thus preventing a mis-function of the optical device.

Yet another aim is to provide a pickup actuator which does not need a damper bond injection process, thus has a simpler manufacturing process, and less manufacturing cost.

According to a first aspect of the present invention, there is provided a pickup actuator comprising a base member, a lens holder which is disposed at the base member so as to be moved in directions of focusing and tracking, and on which an objective lens is mounted; a lens holder driving means applied directly between the base member or parts fast with the base member and the lens holder or parts fast with the lens holder for driving the lens holder toward the directions of focusing and tracking; **characterised in that** there is a damping fluid for damping a vibration occurring at the lens holder when the lens holder is driven by the lens holder driving means in both the focusing and tracking direction, the damping fluid having a viscosity ranging from 1000cP to 2000cP at 27°C, in which magnetic particulates are stably dispersed.

Here, it is preferable that the damping fluid is magnetized to 100G ^{~} 200G in a magnetic field of 3^{~} 4k0e.

According to embodiments of the present invention, when there occurs vibration at the lens holder by any reasons, such vibration is directly damped by the damping fluid applied between the base member and the lens holder. Thus, an objective lens can reach its designated spot more rapidly.

Further, since there is no need for an injection of damping bond into an inner space of the holder supporting portion, the manufacturing process becomes simpler, and the manufacturing costs thereof are accordingly reduced.

According to a preferred embodiment of the present invention, the pickup actuator comprises a base member, a lens holder disposed at the base member to be moved toward directions of focusing and tracking. In the preferred embodiment, an objective lens is mounted on the lens holder; the lens holder is driven by a lens holder driving means which drives the lens holder toward the directions of focusing and tracking; the lens holder driving means comprises a pair of magnets and a pair of driving coils; the magnets are attached to both sides of the lens holder, and the driving coil is disposed at the base member, while spaced from the magnets at a predetermined distance; the damping fluid is applied between the magnets and the driving coil so as to damp the vibration occurring at the lens holder when the lens holder is driven.

According to another preferred embodiment of the present invention, the pickup actuator comprises a base member, and a lens holder whose one end is suspended by a wire spring. Thus, the lens holder is moved toward directions of focusing and tracking. An objective lens is mounted on the lens holder. A pair of yokes are preferably disposed at the base member, while spaced from each other at a predetermined distance, and a pair of magnets are respectively attached to the yokes. A driving coil is preferably disposed at the lens holder in order to drive the lens holder toward the directions of focusing and tracking, by electromagnetically interacting with the magnets. Additionally, a magnetic fluid is preferably applied between the magnets and the lens holder so as to damp the vibration occurring at the lens holder when the lens holder is driven. Thus, the vibration of the lens holder can be damped more rapidly.

According to yet another preferred embodiment of the present invention, the pickup actuator comprises a base member, and a lens holder whose one end is suspended by a wire spring. Thus, the lens holder is moved toward directions of focusing and tracking. An objective lens is mounted on the lens holder. A pair of yokes are preferably disposed at the base member, while spaced from each other at a predetermined distance. A pair of first magnets and a pair of second magnets are preferably respectively attached to inner and outer surfaces of the yokes. Vertical parts are preferably provided to the lens holder, the vertical parts having openings for accommodating the yokes together with the first and the second magnets attached to the yokes. Additionally, a driving coil is preferably disposed at the lens holder to drive the lens holder toward the directions of focusing and tracking, by electromagnetically interacting with the magnets disposed at the base member and a magnetic fluid is applied between the first magnets and the lens holder so as to damp the vibration occurring at the lens holder when the lens holder is driven. Here, the magnetic fluid may be applied between the second magnets and the lens holder. Also, the magnetic fluid may be applied between the first magnets and the lens holder, and at the same time between the second magnets and the lens holder. In any case, a remarkable damping effect can be achieved.

According to yet another preferred embodiment of the present invention, the pickup actuator comprises a base member, and a lens holder whose one end is suspended by a wire spring. Thus, the lens holder is moved toward directions of focusing and tracking. An objective lens is mounted on the lens holder. The pickup actuator also has a magnetic fluid for damping the vibration occurring at the lens holder when the lens holder is driven. In this preferred embodiment, a base member has a shaft protruded upward from a center portion thereof. As the shaft of the base member is inserted into a shaft hole of the lens holder, the lens holder is movably disposed on the base member so as to be moved toward the directions of focusing and tracking. A pair of first yokes and a pair of second yokes are preferably disposed at both sides of the shaft, while having the shaft of the base member in the center and being spaced from each other at a predetermined distance. A pair of first magnets are preferably respectively attached to inner surfaces of the first and the second yokes. This preferred embodiment may include the following further features: a driving coil disposed at the lens holder, maintaining a predetermined distance from the first and the second magnets; the driving coil comprises a focusing and a tracking coil wound around the lens holder to cross perpendicularly to each other; by an electromagnetic interaction between the magnets and the driving coil, the lens holder is driven toward the directions of focusing and tracking; the magnetic fluid is applied between the first magnets and the focusing coil of the lens holder. It would be noted that the magnetic fluid applying is not limited to the above case only. That is, the magnetic fluid may be applied between the second magnets and the tracking coil of the lens holder. Also, the magnetic fluid may be applied between the first magnets and the focusing coils, and at the same time between the second magnets and the tracking coil of the lens holder. In this case, it is preferable that a blocking part is formed at the yokes to prevent the magnetic fluid from gravitating toward the magnets which are disposed adjacently to the yokes. Like mentioned above, the remarkable damping effect can be achieved by the subject preferred embodiment of the present invention.

According to yet another preferred embodiment of the present invention, the pickup actuator comprises a base member, and a lens holder whose one end is suspended by a wire spring. Thus, the lens holder is moved toward directions of focusing and tracking. An objective lens is mounted on the lens holder. The pickup actuator also has a magnetic fluid for damping the vibration occurring at the lens holder when the lens holder is driven. A base member preferably has a shaft protruded upward from a center portion thereof. As the shaft of the base member is inserted into a shaft hole of the lens holder, the lens holder may be movably disposed on the base member so as to be moved toward the directions of focusing and tracking. A pair of first yokes and a pair of second yokes are preferably disposed at both sides of shaft, while having the shaft of the base member in the center and being spaced from each other at a predetermined distance. The second yokes are preferably substantially of a semi-cylindrical shape. A pair of first magnets and a pair of second magnets are preferably respectively attached to the second yokes, while facing each other. The lens holder preferably has an opening for accommodating the first yokes disposed at the base member. Additionally, a pair of focusing coils are preferably disposed at the lens holder, while maintaining a predetermined distance from the first magnets. Also, the tracking coils are preferably disposed at the lens holder, while maintaining a predetermined distance from the second magnets. By an electromagnetic interaction between the magnets and the focusing coils and the tracking coils, the lens holder is driven toward the directions of focusing and tracking. Meanwhile, the magnetic fluid is preferably applied between the first magnets and the focusing coils of the lens holder to damp the vibration occurring at the lens holder when the lens holder is driven. The magnetic fluid may be applied between the second magnets and the tracking coils of the lens holder. Also, the magnetic fluid may be applied between the first magnets and the focusing coils, and at the same time between the second magnets and the tracking coils of the lens holder. Also, the magnetic fluid may be applied between the opening of the lens holder and the first yokes accommodated in the opening. And in this case, it is preferable that a blocking part is formed at the yokes to prevent the magnetic fluid from gravitating toward the magnets which are disposed adjacently to the yokes. Like mentioned above, the remarkable damping effect can be achieved by the subject preferred embodiment of the present invention.

For a better understanding or the invention, and to show how embodiments of the same may be carried into effect, reference will now be made, by way of example, to the accompanying diagrammatic drawings, in which:
Figure 1 is a perspective view showing a conventional pickup actuator from which a lens holder is detached;
Figure 2 is a perspective view showing the pickup actuator of Figure 1 assembled;
Figure 3 is a sectional view showing a main portion of the pickup actuator of Figure 2;
Figure 4 is graph for explaining a damping effect obtained by a conventional damper bond;
Figure 5A is a perspective view showing a pickup actuator according to a first preferred embodiment of the present invention;
Figure 5B is a sectional view showing the pickup actuator shown in Figure 5A;
Figure 6 is a graph for explaining a damping effect obtained by a damping fluid in embodiments of the present invention;
Figure 7A is a perspective view showing a pickup actuator according to a second preferred embodiment of the present invention;
Figure 7B is a sectional view showing a main portion of the pickup actuator shown in Figure 7A;
Figure 8A is a perspective view showing a pickup actuator according to a third preferred embodiment of the present invention;
Figure 8B is a plan view showing the pickup actuator shown in Figure 8A;
Figure 9 is a plan view showing another example of applying the damping fluid to the pickup actuator shown in Figure 8A;
Figure 10 is a plan view showing still another example of applying the damping fluid to the pickup actuator shown in Figure 8A;
Figure 11 is a plan view showing still another example of applying the damping fluid to the pickup actuator shown in Figure 8A;
Figure 12A is a perspective view showing a pickup actuator according to a fourth preferred embodiment of the present invention;
Figure 12B is a sectional view showing a main portion of the pickup actuator shown in Figure 12A;
Figure 13 is a sectional view showing another example of applying the damping fluid to the pickup actuator shown in Figure 12A;
Figure 14 is a sectional view showing still another example of applying the damping fluid to the pickup actuator shown in Figure 12A;
Figure 15 is a sectional view showing still another example of applying the damping fluid to the pickup actuator shown in Figure 12A;
Figure 16A is a perspective view showing a pickup actuator according to a fifth preferred embodiment of the present invention;
Figure 16B is a sectional view showing a main portion of the pickup actuator shown in Figure 16A;
Figure 17A is a sectional view showing another example of applying the damping fluid to the pickup actuator shown in Figure 16A;
Figure 17B is a sectional view showing a main portion of Figure 17A;
Figure 18 is a perspective view showing another example of applying the damping fluid to the pickup actuator shown in Figure 16A;
Figure 19A is a perspective view showing still another example of applying the damping fluid to the pickup actuator shown in Figure 16A; and,
Figure 19B is a sectional view showing a main portion of Figure 19A.

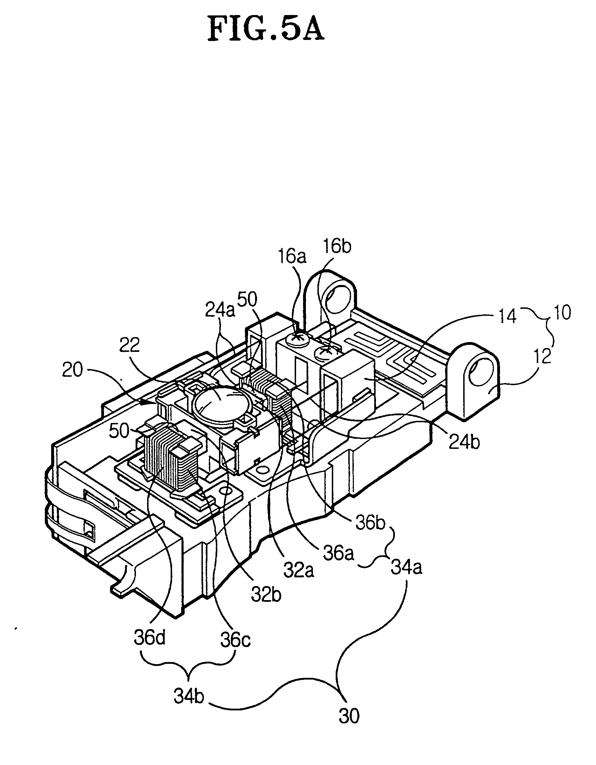

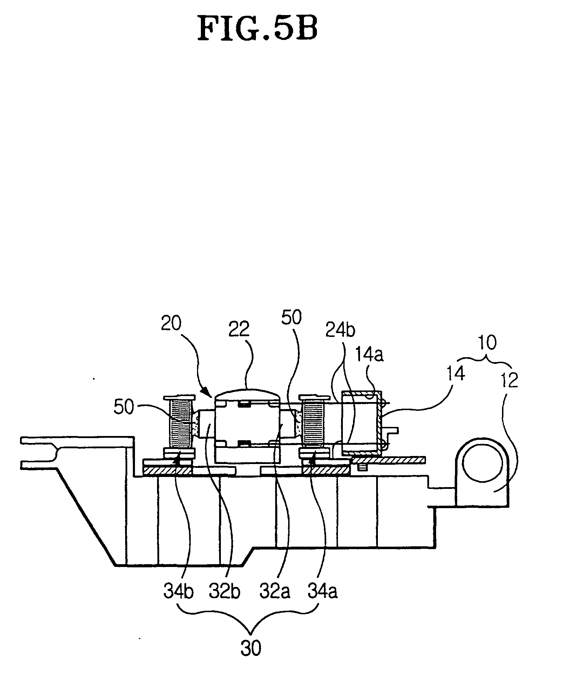

Figures 5A to 6 show a pickup actuator according to the first preferred embodiment of the present invention. It would be understood that the like elements would be given the same reference numerals as above. Accordingly, a reference numeral 10 in the figures is a base member, 20 is a lens holder, 30 is a lens holder driving means, and 50 is a damping fluid.

As shown in Figures 5A to 6, the base member 10 comprises a body portion 12 and a holder supporting portion 14. The holder supporting portion 14 is attached to an upper side of the body portion 12 by a pair of screws 16a and 16b.

An objective lens 22 is mounted on the lens holder 20, while the lens holder 20 is suspended at the holder supporting portion 14 of the base member 10 by two pairs of wire springs 24a and 24b, while being capable of being moved toward focusing and tracking direction.

The lens holder driving means 30 comprises a pair of magnets 32a and 32b, and a pair of driving coils 34a and 34b. The magnets 32a and 32b are respectively attached to both sides of the lens holder 20, and form a magnet circuit. The driving coils 34a and 34b are disposed at the body portion 12 of the base member 10, while facing each other and being spaced from the respective magnets 32a and 32b at a predetermined distance. The two driving coils 34a and 34b respectively have a pair of focusing coils and a pair of tracking coils 36a, 36b, and 36c, 36d which are wound in a perpendicular fashion with respect to each other.

A damping fluid 50 is applied to surfaces of the magnets 32a and 32b so as to contact with the driving coils 34a and 34b sufficiently. The damping fluid 50 functions to damp the vibration occurring at the lens holder 20 while the lens holder 20 is driven.

The damping fluid 50 is in a colloid state, having ferromagnetic super particulates dispersed therein. Thus, the magnetic particles are not separated from the damping fluid 50 even when the centrifugal force of high intensity, or the magnetic field is exerted to the fluid. Here, Fc₃O₄ can be utilized as the magnetic particles.

It is preferable that the damping fluid 50 has a viscosity ranging from 1000cP to 2000cP, at an atmospheric temperature twenty seven centigrade (27°C). Additionally, it is preferable that the damping fluid 50 is magnetized to a degree from 100G to 200G in the magnetic field of 3 ∼ 4k0e.

Accordingly, due to the viscosity thereof, the damping fluid 50 damps the vibration of the lens holder 20, and at the same time, the damping fluid 50 does not gravitate downward. Thus, the appropriate amount of damping fluid 50 stays between the magnets 32a and 32b and the driving coils 34a and 34b.

U.S. corporation, the Ferrofluidics disclosed a preferred example of such damping fluid 50, i.e., a magnetic fluid. According to the related data, the disclosed magnetic fluid are composed of 4 ∼ 6 % of magnetite, 16 ∼ 20% of oil soluble dispersant, 73 ∼ 80 % of carrier liquid, and 0 ∼ 1 % of aromatic amine.

The pickup actuator constructed as above performs the focusing and tracking of the objective lens 22 by moving the magnets 32a and 32b, i.e. lens holder 20 toward the directions of focusing and tracking. The lens holder 20 is moved by controlling directions and intensity of electric currents flowing through the focusing and tracking coils 36a, 36c and 36b, 36d.

In certain situations, as described in the Prior Art, vibrations occur. Such vibration, however, is directly damped by the damping fluid 50 disposed between the magnets 32a and 32b and the driving coils 34a and 34b, before the vibration is transmitted to the wire springs 24a and 24b.

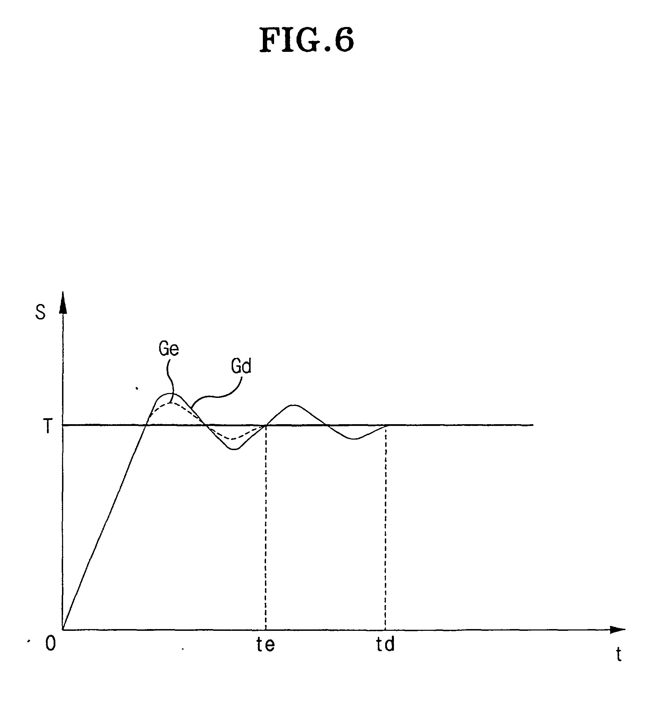

Accordingly, as indicated by a line "Ge" in Figure 6, the time "Tₑ" taken for the objective lens 22 to reach the designated spot "T" and be settled therein is remarkably shortened, in comparison with the time spent with the conventional damper bond (see line "Gd" of Figure 6).

More specifically, when the vibration occurs during the focusing and tracking of the objective lens 22, the objective lens 22 can be rapidly settled in the designated spot "T", because the vibration is directly damped by the damping fluid 50 disposed between the magnets 32a and 32b and the driving coils 34a and 34b before the vibration is transmitted to the wire springs 24a and 24b.

Especially, according to the pickup actuator constructed as above, even when the vibration occurs at the lens holder 20 due to the outside vibration or the shock, the vibration of the lens holder 20 is efficiently damped. Thus, the pickup actuator has a high adaptability so that it can be employed into optical devices having vibrations of high intensity such as the optical device in automobiles, etc.

Further, since a heat generated from the driving coils 34a and 34b during the focusing and tracking of the pickup actuator is efficiently cooled through the damping fluid 50, the functional deterioration of the pickup actuator, or damage to the optical pickup due to the heat can be prevented or reduced.

Still further, since there is no need to inject the damper bond into the inner space of the holder supporting portion of the base member, the manufacturing process of the optical pick device becomes simpler, and the manufacturing costs are accordingly reduced.

Meanwhile, the damping fluid according to the teachings of the present invention can also be used together with the conventional damper bond, and still has the same superb damping and coil cooling effect as described above. Thus, it would be understood that the scope of the Claims does not exclude such cases.

Even though the preferred embodiment of the present invention suggests the magnetic fluid as the damping fluid, it is not limited to the suggested magnetic fluid only, but can be any substances which perform the same function as the suggested magnetic fluid.

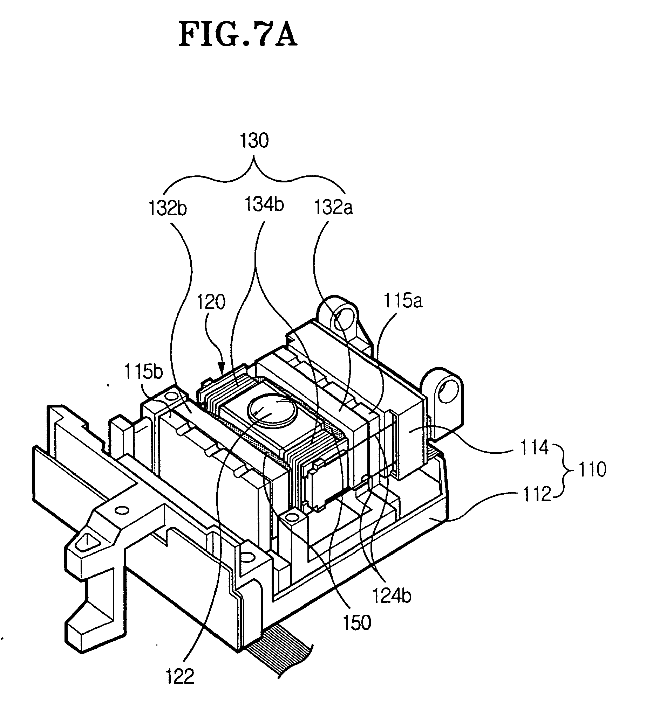

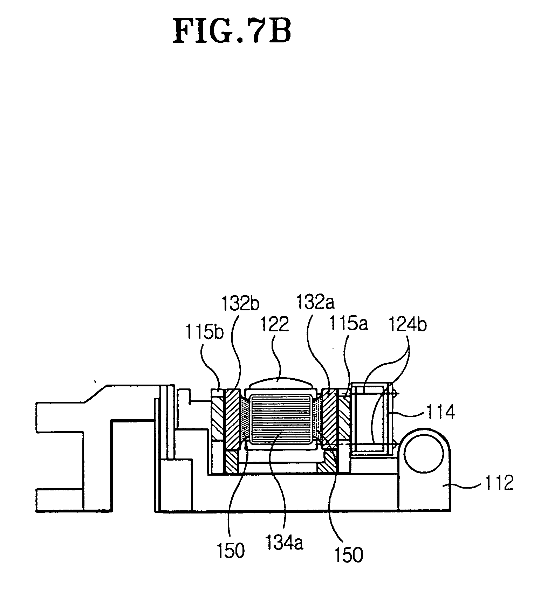

Figures 7A and 7B show a pickup actuator according to the second preferred embodiment of the present invention. According to the second preferred embodiment, a damping means utilizing the damping fluid is provided to the pickup actuator. A reference numeral 110 is a base member, 120 is a lens holder, 130 is a lens holder driving means, and 150 is a damping fluid.

As shown, the base member 110 comprises a body portion 112 and a holder supporting portion 114. A pair of yokes 115a and 115b are disposed at an upper surface of the body portion 112, while being spaced from each other at a predetermined distance. The holder supporting portion 114 is fixedly attached to an outer surface of one yoke 115a by a plurality of screws.

An objective lens 122 is mounted on the lens holder 120, and the lens holder 120 is suspended at the holder supporting portion 114 of the base member 110 by two pairs of wire springs 124a and 124b so that the lens holder 120 can be moved to the direction of the focusing and the tracking.

The lens holder driving means 130 comprises a pair of magnets 132a and 132b, and a driving coil 134. The magnets 132a and 132b are respectively attached to an inner surface of the two yokes 115a and 115b, and form a magnetic circuit. Here, the yokes 115a and 115b are disposed at the base member 110, having a predetermined distance from each other. The yokes 115a and 115b function to maximize and concentrate the magnetic flux density toward a desired direction. The driving coil 134 comprises a focusing coil 134a and a tracking coil 134b which are wound to perpendicularly cross each other. The driving coil 134 is disposed at the lens holder 120, maintaining a predetermined distance from each of the magnets 132a and 132b.

The damping fluid 150 is applied to the surfaces of the magnets 132a and 132b so as to contact with the driving coil 134 disposed at the lens holder 120 sufficiently. The damping fluid 150 is the same one employed in the first preferred embodiment of the present invention. Thus, the description of the damping fluid 150 along with its effect will be omitted since it has been described as above in the description of the first preferred embodiment of the present invention.

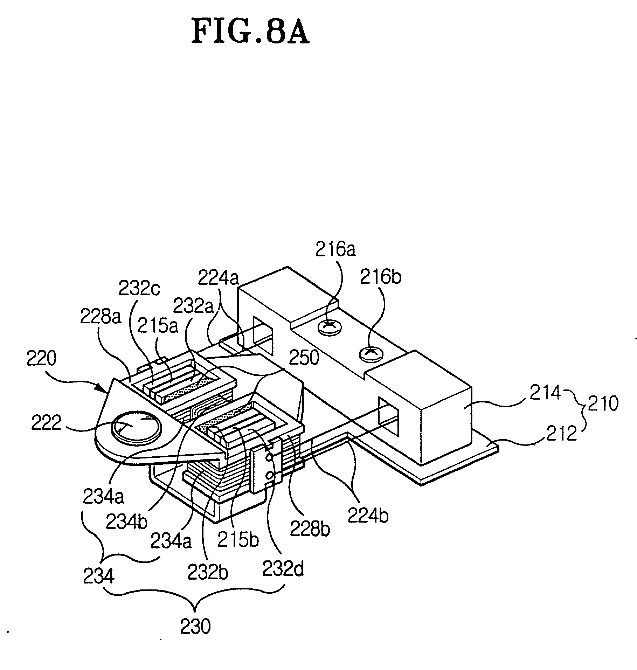

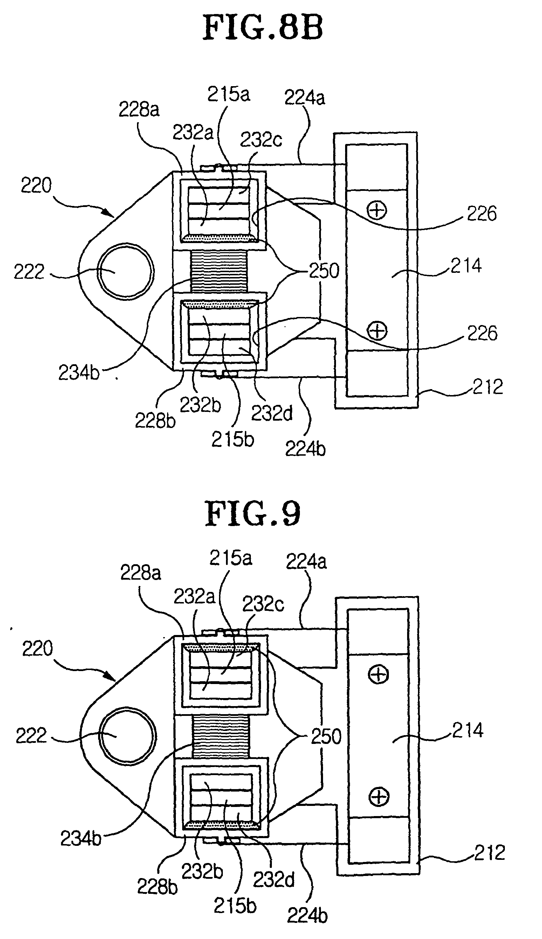

Figures 8A to 11 show a pickup actuator according to the third preferred embodiment of the present invention. According to the third preferred embodiment, the damping means utilizing a damping fluid is provided to the pickup actuator having two pairs of magnets. A reference numeral 210 is a base member, 220 is a lens holder, 230 is a lens holder driving means, and 250 is a damping fluid.

As shown, the base member 210 comprises a body portion 212 and a holder supporting portion 214. The holder supporting portion 214 is fixedly attached to an upper side of the body portion 212 by a plurality of screws 216a and 216b. A pair of yokes 215a and 215b are disposed at the upper surface of the body portion 212, having a predetermined distance from each other.

A pair of first magnets 232a and 232b are respectively attached to the inner surfaces of the yokes 215a and 215b, while another pair of second magnets 232c and 232d are respectively attached to the outer surfaces of the yokes 215a and 215b.

An objective lens 222 is mounted on the lens holder 220, and the lens holder 220 is suspended at the holder supporting portion 214 of the base member 210 by two pairs of wire springs 224a and 224b so as to be moved toward the directions of focusing and tracking. Further, the lens holder 220 comprises a pair of yokes 215a and 215b, and a pair of vertical parts 228a and 228b. The yokes 215a and 215b are disposed at the base member 210, and the vertical parts 228a and 228b have openings 226 to accommodate the first and the second magnets 232a, 232b, 232c, and 232d.

The lens holder driving means 230 comprises a pair of first magnets 232a and 232b, a pair of second magnets 232c and 232d, and a driving coil 234. The first and the second magnets 232a, 232b, 232c, and 232d are respectively attached to inner and outer surfaces of two yokes 215a and 215b which are mounted on the base member. The driving coil 234 comprises a pair of focusing coils 234a wound around the vertical parts 228a and 228b formed at both sides of the lens holder 220, and a tracking coil 234b wound around the linking portion of the both vertical parts 228a and 228b. The tracking coil 234b is wound to cross perpendicularly to the focusing coils 234a.

The damping fluid 250 is applied between the inner walls of the openings 226 and the first magnets 232a and 232b, to damp the vibration occurring while the lens holder 220 is driven. Here, the openings 226 are defined at the vertical parts 228a and 228b of the lens holder 220.

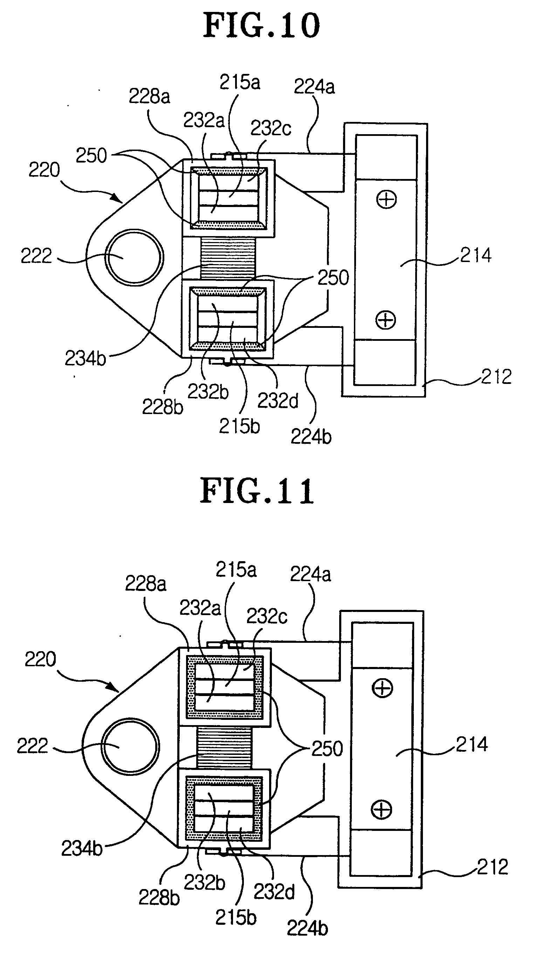

Alternatively, as shown in Figure 9, the damping fluid 250 may be applied between the outer walls of the openings 226 defined at the vertical parts 228a and 228b of the lens holder 220, and the second magnets 232c and 232d. Also, as shown in Figure 10, the damping fluid 250 may be applied between the inner and outer walls of the openings 226 and the first and the second magnets 232a, 232b, 232c, and 232d. Still also, as shown in Figure 11, the damping fluid 250 may be applied among the whole inner wall surfaces of the openings 226, side surfaces of the yokes 215a and 215b accommodated therein, and the whole outer wall surfaces of the first and the second magnets 232a, 232b, 232c, and 232d. Here, the damping fluid 250 is the one utilized by the first and the second preferred embodiment of the present invention. Thus, the further description of the damping fluid along with its effects are omitted, since it has been described as above in the description of the first preferred embodiment of the present invention.

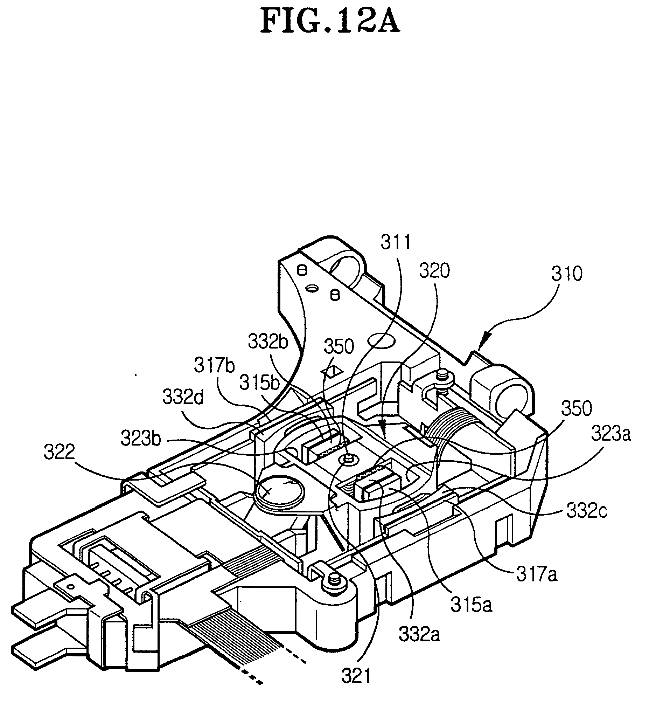

Figures 12A to 15 show the pickup actuator according to the fourth preferred embodiment of the present invention. According to the fourth preferred embodiment of the present invention, a damping means utilizing the damping fluid is applied to a shaft-type pickup actuator.

As shown, the pickup actuator according to the fourth preferred embodiment of the present invention comprises a base member 310, a lens holder 320, a lens holder driving means 330, and a damping fluid 350. The lens holder 320 is disposed at the base member 31, capable of being moved toward the directions of focusing and tracking, and the lens holder driving means 330 drives the lens holder 320 toward the direction of focusing and the tracking. The damping fluid 350 damps the vibration occurring at the lens holder 320, when the lens holder 320 is driven.

A shaft 311 is disposed at a center portion of the base member 310. A pair of first yokes 315a and 315b are disposed at both sides of the shaft 311, while having the shaft 311 in the center and being spaced from each other at a predetermined distance. Another pair of second yokes 317a and 317b are disposed at the outer side of the first yokes 315a and 315b, having a predetermined distance from each other. A pair of first magnets 332a and 332b are attached to the inner surfaces of the first yokes 315a and 315b, while facing each other. Another pair of second magnets 332c and 332d are respectively attached to the inner surfaces of the second yokes 317a and 317b, also facing each other.

A shaft hole 321 is defined at the center portion of the lens holder 320 so as to accommodate a shaft 311 of the base member 310. As the shaft 311 of the base member 310 is inserted into the shaft hole 321, the lens holder 320 is mounted on the base member 310. An objective lens 322 is mounted on the lens holder 320. The lens holder 320 comprises a pair of openings 323a and 323b for accommodating the first yokes 315a and 315b. Accordingly, the lens holder 320 is mounted on the base member 310 so as to be moved toward the directions of focusing and tracking.

The lens holder driving means 330 comprises a first and a second magnets 332a, 332b, 332c, and 332d, and a driving coil 334. Here, the first and the second magnets 332a, 332b, 332c, and 332d are respectively attached to the first yokes 315a and 315b and the second yokes 317a and 317b. The driving coil 334 comprises a focusing coil 334a and a pair of tracking coils 334b. The focusing coil 334a is wound around a circumference of the shaft hole 321 of the lens holder 320, maintaining a predetermined distance from the first magnets 332a and 332b. While, the tracking coils 334b are wound around both sides of the lens holder 320, maintaining the a predetermine distance from the second magnets 332c and 332d. The focusing coil 334a and the tracking coils 334b are wound to cross perpendicularly to each other. Therefore, the lens holder 320 can be moved from the base member 310 toward the directions of focusing and tracking by an electromagnetic interaction of the first and the second magnets 332a, 332b, 332c, and 332d, the focusing coil 334a, and a pair of tracking coils 334b.

The damping fluid 350 is applied to the surfaces of the first magnets 332a and 332b such that the damping fluid 350 can be in contact with the focusing coil 334a of the lens holder 320 sufficiently, whereby the vibration occurring at the lens holder 320 during a driving of the lens holder 320 is rapidly damped.

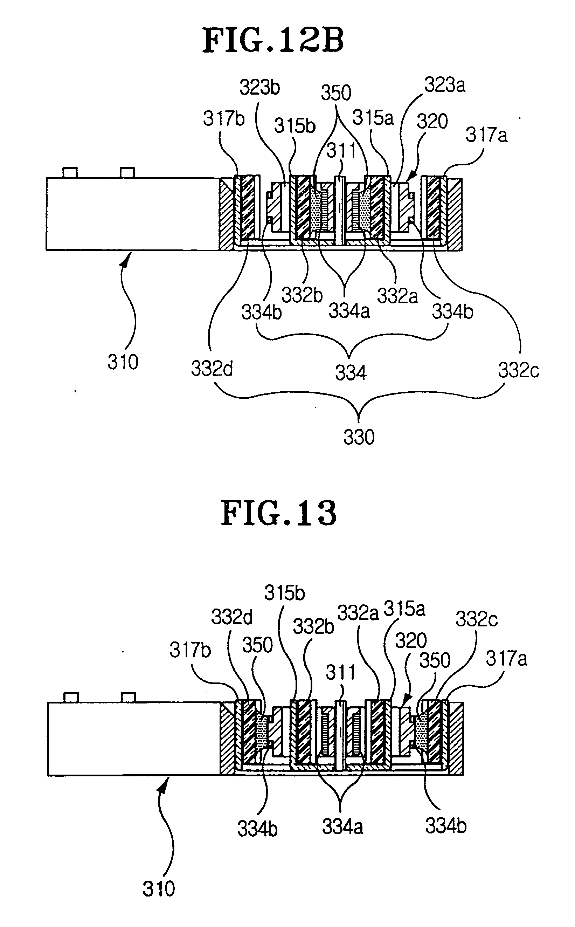

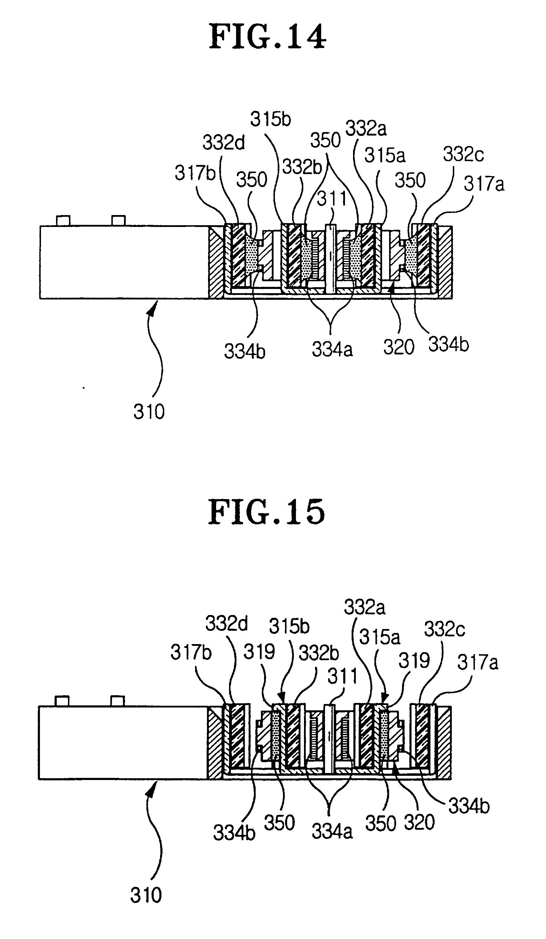

As shown in Figure 12B, the damping fluid 350 is applied between the focusing coil 334a of the lens holder 320 and the first magnets 332a and 332b. However, it is not limited thereto, but the damping fluid 350 can be applied to other places. That is, as shown in Figure 13, the damping fluid 350 may be applied to the surfaces of the second magnets 332c and 332d, to be in contact with the tracking coils 334b disposed at both sides of the lens holder 320 sufficiently. Alternatively, as shown in Figure 14, the damping fluid 350 may be applied between the focusing coil 334a of the lens holder 320 and the first magnets 332a and 332b, and at the same time between the tracking coils 334b of the lens holder 320 and the second magnets 332c and 332d.

Also, as shown in Figure 15, the damping fluid 350 may be applied between the openings 323a and 323b of the lens holder 320 and a pair of first yokes 315a and 315b which are accommodated in the openings 323a and 323b. In this case, it is preferable that a blocking part 319 is provided at edges of the yokes 315a and 315b to block the damping fluid 350, since the damping fluid 350 applied to the yokes 315a and 315b may gravitate toward the first magnets 332a and 332b which are disposed adjacently to the yokes 315a and 315b due to the magnetic property thereof. The damping fluid 350 here is the same one utilized in the first, second, and the third preferred embodiments of the present invention. Thus, further description of the damping fluid and its effects will be omitted, since it has been already described as above in the description of the first preferred embodiment of the present invention.

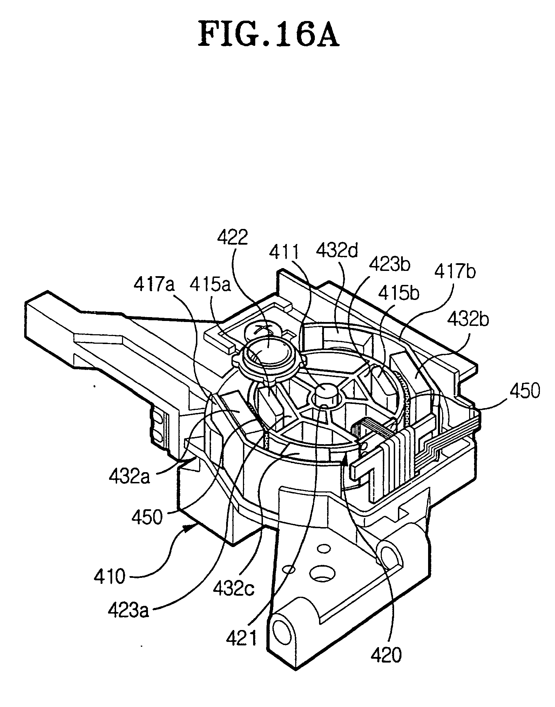

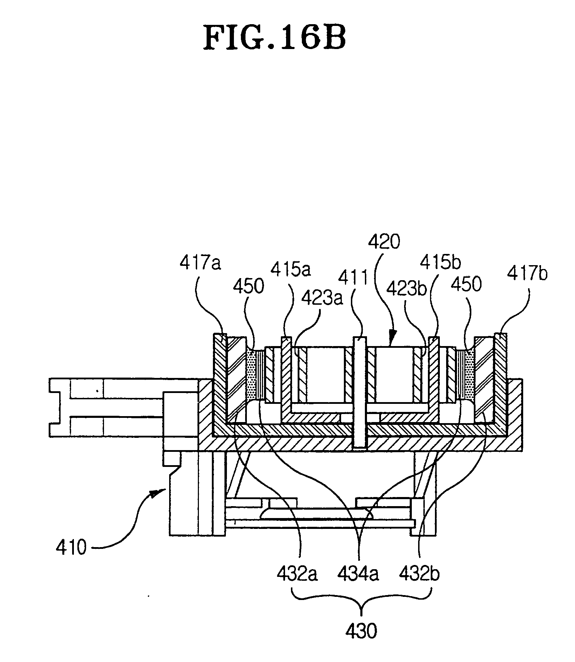

Figures 16A to 19B show the pickup actuator according to the fifth preferred embodiment of the present invention.

As shown, the pickup actuator according to the fifth preferred embodiment of the present invention, schematically comprises a base member 410, a lens holder 420, a lens holder driving means 430, and a damping fluid 450. The lens holder 420 has a cylindrical shape, and is disposed at the base member so as to be moved toward the directions of focusing and tracking. The lens holder driving means 430 drives the lens holder 420 toward the directions of focusing and tracking, and the damping fluid 450 damps the vibration occurring at the lens holder 420 when the lens holder 420 is driven.

A shaft 411 is disposed at the center portion of the base member 410. A pair of first yokes 415a and 415b are disposed at both sides of the shaft 411, while having the shaft 411 in the center and being spaced from each other at a predetermined distance. Another pair of second yokes 417a and 417b are disposed at the outer sides of the first yokes 415a and 415b, while facing each other and being spaced from each other at a predetermined distance. Here, the second yokes 417a and 417b are substantially in semi-cylindrical shape. A pair of first magnets 432a and 432b are attached to one sides of the semi-cylindrical second yokes 417a and 417b, while the other pair of second magnets 432c and 432d are attached to the other sides of the second yokes 417a and 417b. Here, each of the first magnets 432a and 432b faces each other, and so is each of the second magnets 432c and 432d.

A shaft hole 421 is defined at the center portion of the lens holder 420, to accommodate the shaft 411 of the base member 410. As the shaft 411 is inserted into the shaft hole 421, the lens holder 420 is mounted on the base member 410. An objective lens 422 is mounted on the lens holder 420. The lens holder 420 is provided with at least one pair of openings 423a and 423b for accommodating a pair of first yokes 415a and 415b disposed at the base member 410, whereby the lens holder 420 is mounted on the base member 41 so as to be moved toward the directions of focusing and tracking.

The lens holder driving means 430 comprises a first and a second magnets 432a, 432b, 432c, and 432d respectively attached to the second yokes 417a and 417b, and a driving coil 434. The driving coil 434 comprises a pair of focusing coils 434a, and a pair of tracking coils 434b. The focusing coils 434a are wound around the both sides of the lens holder 320, maintaining a predetermined distance from the first magnets 432a and 432b. While, the tracking coils 434b are wound around the both sides of the lens holder 420, maintaining a predetermined distance from the second magnets 432c and 432d. The focusing coils 434a and the tracking coils 434b are wound to cross perpendicularly to each other. Thus, the lens holder 420 is moved toward the directions of focusing and tracking, by the electromagnetic interaction of the first and the second magnets 432a, 432b, 432c, and 432d, the focusing coil 434a, and the tracking coils 434b.

The damping fluid 450 is applied to the surfaces of the first magnets 432a and 432b so as to be in contact with the focusing coils 434a at both sides of the lens holder 420 sufficiently. Accordingly, the vibration occurring at the lens holder 420 is rapidly damped when the lens holder 420 is driven.

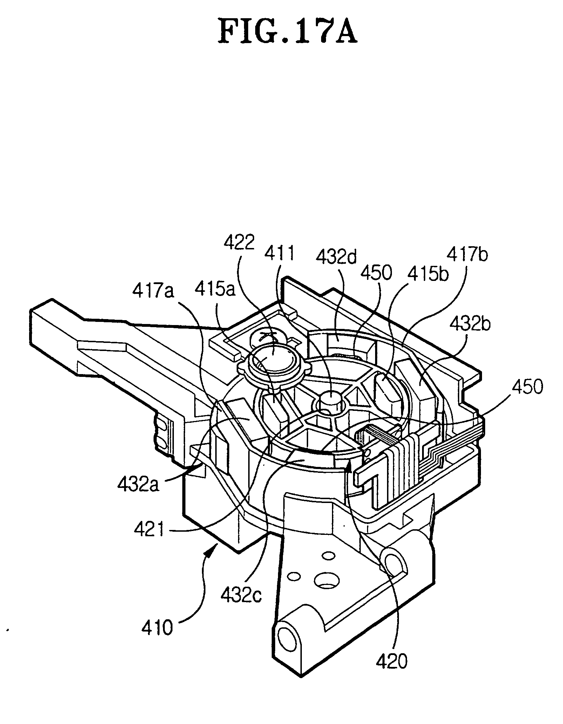

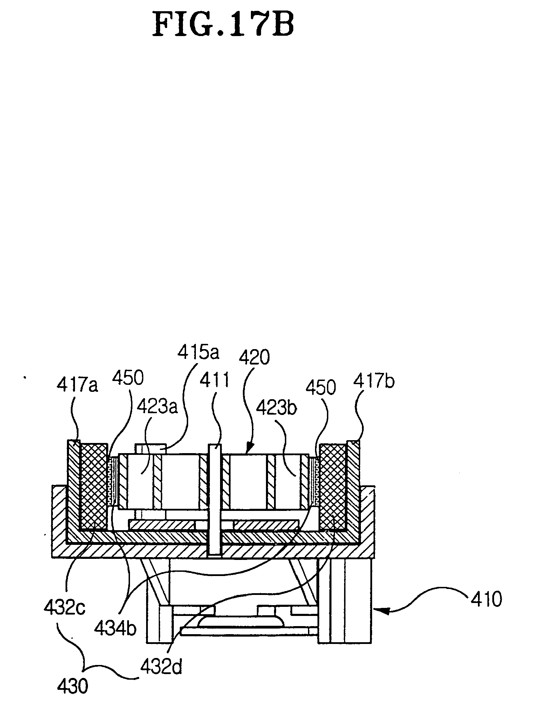

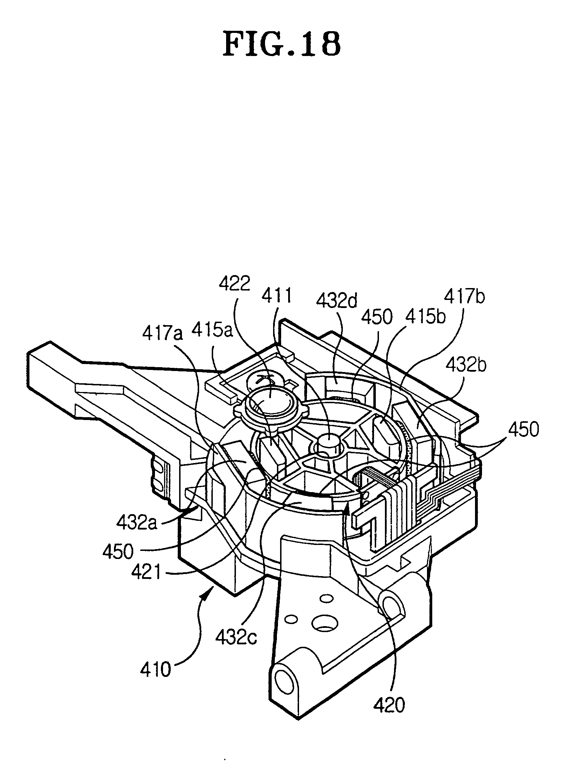

As shown in Figures 17A and 17B, the damping fluid 450 may be applied to the surfaces of the pair of second magnets 432c and 432d, to be in contact with the tracking coils 434b at both sides of the lens holder 420 sufficiently. Alternatively, as shown in Figure 18, the damping fluid 450 may be applied between the focusing coil 434a of the lens holder 420 and the first magnets 432a and 432b, and at the same time between the tracking coils 434b of the lens holder 420 and the second magnets 432c and 432d.

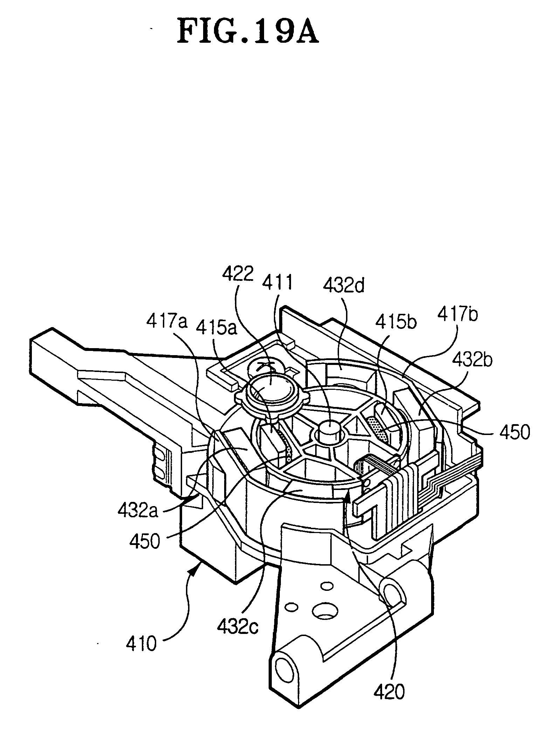

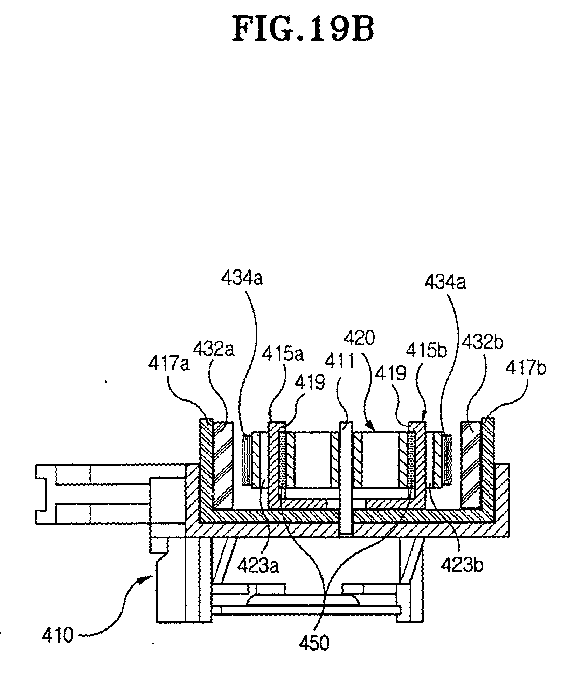

Also, as shown in Figure 19A and 19B, the damping fluid 450 may be applied between the openings 423a and 423b of the lens holder 420 and the pair of first yokes 415a and 415b accommodated within the openings 423a and 423b. In this case, it is preferable that a blocking part 419 is formed at edges of the first yokes 415a and 415b to block the damping fluid 450, since the damping fluid 450 applied to the first yokes 415a and 415b may gravitate toward the first magnets 432a and 432b which are disposed adjacently to the first yokes 415a and 415b due to the magnetic property thereof. Here, the damping fluid 450 is the one utilized in the first, second, third, and the fourth preferred embodiment of the present invention. Thus, further description of the damping fluid 450 along with its effects is omitted, since it has been described as above in the description of the first preferred embodiment of the present invention.
White the present invention has been particularly shown and described with reference to preferred embodiments thereof, it will be understood by those skilled in the art that various changes in form and details may be effected therein without departing from the scope of the invention as defined by the appended claims.

## Claims

1. A pickup actuator of an optical device comprising:
a base member (10, 110, 210, 310, 410);
a lens holder (20, 120, 220, 320,420) which is disposed at the base member so as to be moved in directions of focusing and tracking, and on which an objective lens (22,122, 222, 322, 422) is mounted;
a lens holder driving means (30, 130, 230, 330, 430) for driving the lens holder toward the directions of focusing and tracking; wherein
a damping fluid (50, 150, 250, 350, 450) applied directly between the base member or parts fastened with the base member and the lens holder or parts fastened with the lens holder for damping a vibration occurring at the lens holder when the lens holder is driven by the lens holder driving means in both the focusing and tracking direction, **charaterised in that** the damping fluid has a viscosity ranging from 1000cP to 2000cP at 27°C, in which magnetic particulates are stably dispersed.

2. The pickup actuator as claimed in claim 1, wherein the base member comprises a body portion (12, 112, 212) and a holder supporting portion (14, 114, 214) attached to one side of the upper surface of the body portion, and the lens holder is suspended by two pairs of wire springs (24a, 24b, 124a, 124b, 224a, 224b).

3. The pickup actuator as claimed in claim 1, wherein the base member is provided with a shaft (311, 411) on the center portion thereof, and the lens holder has a shaft hole (321, 421) for accommodating the shaft, and the lens holder is supported with respect to the base member in the manner of being inserted to the shaft through the shaft hole.

4. The pickup actuator as claimed in claim 2, wherein the lens holder driving means comprises:
a pair of magnets (32a, 32b) respectively attached to both sides of the lens holder; and
a driving coil (34a, 34b) which is disposed on an upper surface of the base member so as to maintain a predetermined distance from the pair of magnets, and which generate an electromagnetic force for driving the lens holder along with the magnets.

5. The pickup actuator as claimed in claim 4, wherein the driving coil comprises a pair of focusing coils (36a, 36b) and a pair of tracking coils (36c, 36d), which are wound to cross perpendicularly to each other.

6. The pickup actuator as claimed in claim 4 or 5, wherein the damping fluid (50) is applied to -the surfaces of the magnets to be in contact with the driving coil sufficiently.

7. The pickup actuator as claimed in claim 2, 3, 4, 5, or 6, wherein the lens holder driving means comprises:
a pair of magnets (132a, 132b, 232a, 232b, 332a, 332b, 432a, 432b) disposed on an upper surface of the base member, spaced from each other at a predetermined distance;
a pair of yokes which support the pair of magnets (115a, 115b, 232a, 323b, 332a, 332b, 432a, 432b) with respect to the base member, and which maximize and concentrate a magnetic flux density of the magnets toward a desired direction; and
a driving coil (134a, 134b, 234a, 234b, 334a, 334b, 434a, 434b) which is disposed on an upper surface of the lens holder so as to maintain a predetermined distance from the magnets, and which generate an electromagnetic force for driving the lens holder along with the magnets.

8. The pickup actuator as claimed in claim 7, wherein the driving coil comprises focusing coils (134a, 234a, 334a, 434a) which are wound around the center of the lens holder in an horizontal fashion with respect to the lens holder, and tracking coils (134b, 234b, 334b, 434b) which are wound around both sides of the lens holder to cross perpendicularly to the focusing coils.

9. The pickup actuator as claimed in claim 7 or 8, wherein the damping fluid (150, 250, 350, 450) is applied to surfaces of the magnets to be in contact with the driving coil at both sides of the lens holder sufficiently.

10. The pickup actuator as claimed in claim 2, wherein the lens holder driving means comprises:
a pair of first magnets (232a, 232b) disposed on an upper surface of the base member while facing each other and being spaced from each other at a predetermined distance;
a pair of second magnets (232c, 232d) respectively disposed at outer sides of the first magnets;
a pair of yokes (215a, 215b) which support the first and the second magnets with respect to the base member, and which maximize and concentrate a magnetic flux density toward a desired direction; and
a driving coil (234) which is mounted on the lens holder, and which generate an electromagnetic force for driving the lens holder along with the first and second magnets, the lens holder having a pair of vertical parts which have openings (226) for accommodating the yokes and the first and the second magnets attached to the yokes.

11. The pickup actuator as claimed in claim 10, wherein the two pairs of first (232a, 232b) and second (232c, 232d) magnets are respectively attached to inner and outer side surfaces of the yokes (215a, 215b), while having the yokes therebetween.

12. The pickup actuator as claimed in claim 10, wherein the driving coil has a pair of focusing coils (234a) respectively wound to be in horizontal fashion with respect to the lens holder, and a tracking coil (234b) wound around a middle portion of the lens holder to cross perpendicularly to the focusing coils.

13. The pickup actuator as claimed in claim 10, wherein the damping fluid (250) is applied between the openings of the lens holder and the first magnets.

14. The pickup actuator as claimed in claim 10 or 13, wherein the damping fluid (250) is applied between the openings of the lens holder and the second magnets.

15. The pickup actuator as claimed in claim 3, wherein the lens holder driving means comprises:
a pair of first magnets (332a, 332b) respectively disposed at both sides of the shaft, while having the shaft of the base member in the center and respectively having a predetermined distance from each other;
a pair of second magnets (332c, 332d) respectively disposed at outer sides of the first magnets, while being spaced from the first magnets at a predetermined distance;
a pair of first yokes (315a, 315b) and a pair of second yokes (317a, 317b) which support the first and the second magnets with respect to the base member, and which concentrate and maximize a magnetic flux density of the first and second magnets toward a desired direction; and
a driving coil (334) which is disposed at the lens holder, and generates an electromagnetic force together with the magnets to drive the lens holder, wherein
the lens holder has a pair of openings (323a, 323b) for accommodating the pair of first yokes together with the first magnets attached to the first yokes.

16. The pickup actuator as claimed in claim 15, wherein the driving coil comprises:
a focusing coil (334a) disposed around a circumference of the shaft hole of the lens holder, while maintaining a predetermined distance from the first magnets; and
a pair of tracking coils (334b) disposed around both sides of the lens holder, while maintaining a predetermined distance from the second magnets;
wherein the focusing coil and the tracking coils are wound to cross perpendicularly to each other.

17. The pickup actuator as claimed in claim 15 or 16, wherein the damping fluid (350) is applied to surfaces of the first magnets so as to be in contact with the focusing coil of the lens holder sufficiently.

18. The pickup actuator as claimed in claim 15, 16 or 17, wherein the damping fluid (350) is applied to surfaces of the second magnets so as to be in contact with the tracking coils of the lens holder sufficiently.

19. The pickup actuator as claimed in claim 15, wherein the damping fluid (350) is applied between the openings of the lens holder and the first yokes.

20. The pickup actuator as claimed in claim 19, wherein the first yokes has a blocking part (319) to prevent the damping fluid from gravitating toward the first magnets.

21. The pickup actuator as claimed in claim 3, wherein the lens holder driving means comprises:
a pair of first yokes (415a, 415b) disposed at the both sides of the shaft, while having the shaft of the base member in the center and being spaced from each other at a predetermined distance;
a pair of second yokes (417a, 417b) which are disposed at outer sides of the first yokes, and each of which is substantially in a semi-cylindrical shape;
a pair of first magnets (432a, 432b) attached to one sides of the second yokes, while facing each other;
a pair of second magnets (432c, 432d) respectively attached to the other sides of the second yokes, while facing each other; and
a driving coil (434) which is disposed at the lens holder, and which generate an electromagnetic force together with the first and the second magnets to drive the lens holder, wherein the lens holder has at least a pair of openings (423a, 423b) for accommodating the first yokes.

22. The pickup actuator as claimed in claim 21, wherein the driving coil comprises:
a pair of focusing coil (434a) disposed at both sides of the lens holder, while maintaining a predetermined distance from the first magnets; and
a pair of tracking coils (434b) disposed at both sides of the lens holder, while maintaining a predetermined distance from the second magnets, wherein the focusing coils and the tracking coils are wound to cross perpendicularly to each other.

23. The pickup actuator as claimed in claim 21 or 22, wherein the damping fluid (450) is applied to surfaces of the first magnets so as to be in contact with the focusing coils of the lens holder sufficiently.

24. The pickup actuator as claimed in claim 21, 22 or 23, wherein the damping fluid (450) is applied to surfaces of the second magnets so as to be in contact with the tracking coils of the lens holder sufficiently.

25. The pickup actuator as claimed in claim 21, wherein the damping fluid (450) is applied between the openings of the lens holder and the first yokes accommodated in the openings.

26. The pickup actuator as claimed in claim 25, wherein the first yokes has a blocking part (419) to prevent the damping fluid from gravitating toward the first magnets.

## Patentansprüche

1. Einrichtung zur Bewegung eines Aufnahmekopfes einer optischen Vorrichtung, umfassend:
ein Basisglied (10, 110, 210, 310, 410);
eine Linsenaufnahme (20, 120, 220, 320, 420), die derart am Basisglied angeordnet ist, dass sie in Fokussier- und Spurverfolgungsrichtungen bewegt werden kann, und an der eine Objektivlinse (22, 122, 222, 322, 422) angebracht ist;
ein Linsenaufnahmeantriebsmittel (30, 130, 230, 330, 430) zum Antreiben der Linsenaufnahme in die Fokussier- und Spurverfolgungsrichtungen; wobei
ein Dämpfungsfluid (50, 150, 250, 350, 450), das direkt zwischen dem Basisglied oder am Basisglied festgemachten Teilen und der Linsenaufnahme oder an der Linsenaufnahme festgemachten Teilen zum Dämpfen einer Vibration anliegt, die an der Linsenaufnahme auftritt, wenn die Linsenaufnahme von dem Linsenaufnahmeantriebsmittel in sowohl Fokussier- als auch Spurverfolgungsrichtung angetrieben wird, **dadurch gekennzeichnet, dass** das Dämpfungsfluid eine Viskosität im Bereich von 1000 cP bis 2000 cP bei 27°C aufweist, in dem magnetische Teilchen stabil dispergiert sind.

2. Einrichtung zur Bewegung eines Aufnahmekopfes nach Anspruch 1, wobei das Basisglied ein Körperstück (12, 112, 212) und ein Aufnahmestützstück (14, 114, 214) aufweist, angebracht an einer Seite der oberen Fläche des Körperstücks, und die Linsenaufnahme an zwei Paaren Drahtfedern (24a, 24b, 124a, 124b, 224a, 224b) aufgehängt ist.

3. Einrichtung zur Bewegung eines Aufnahmekopfes nach Anspruch 1, wobei das Basisglied mit einer Welle (311, 411) auf dessen Mittelstück versehen ist und die Linsenaufnahme ein Wellenloch (321, 421) zur Aufnahme der Welle hat und die Linsenaufnahme hinsichtlich des Basisglieds durch Einführen der Welle durch das Wellenloch gestützt ist.

4. Einrichtung zur Bewegung eines Aufnahmekopfes nach Anspruch 2, wobei das Linsenaufnahmeantriebsmittel Folgendes umfasst:
ein Paar Magnete (32a, 32b), jeweils an beiden Seiten der Linsenaufnahme angebracht; und
eine Antriebsspule (34a, 34b), die auf einer oberen Fläche des Basisglieds derart angeordnet ist, dass sie einen vorbestimmten Abstand zum Paar Magnete beibehält, und die mit den Magneten eine elektromagnetische Kraft zum Antrieb der Linsenaufnahme erzeugt.

5. Einrichtung zur Bewegung eines Aufnahmekopfes nach Anspruch 4, wobei die Antriebsspule ein Paar Fokussierspulen (36a, 36b) und ein Paar Spurverfolgungsspulen (36c, 36d) umfasst, die derart gewickelt sind, dass sie einander senkrecht kreuzen.

6. Einrichtung zur Bewegung eines Aufnahmekopfes nach Anspruch 4 oder 5, wobei das Dämpfungsfluid (50) derart auf die Flächen der Magnete aufgetragen ist, dass ausreichend Kontakt mit der Antriebsspule besteht.

7. Einrichtung zur Bewegung eines Aufnahmekopfes nach Anspruch 2, 3, 4, 5 oder 6, wobei das Linsenaufnahmeantriebsmittel Folgendes umfasst:
ein Paar Magnete (132a, 132b, 232a, 232b, 332a, 332b, 432a, 432b), angeordnet auf einer oberen Fläche des Basisglieds, voneinander mit einem vorbestimmten Abstand beabstandet;
ein Paar Joche, die hinsichtlich des Basisglieds das Paar Magnete (115a, 115b, 232a, 232b, 332a, 332b, 432a, 432b) stützen, und die eine Magnetflussdichte der Magnete in Richtung einer gewünschten Richtung maximieren und konzentrieren; und
eine Antriebsspule (134a, 134b, 234a, 234b, 334a, 334b, 434a, 434b), die derart auf einer oberen Fläche der Linsenaufnahme angeordnet ist, dass sie einen vorbestimmten Abstand zu den Magneten beibehält, und die mit den Magneten eine elektromagnetische Kraft zum Antrieb der Linsenaufnahme erzeugt.

8. Einrichtung zur Bewegung eines Aufnahmekopfes nach Anspruch 7, wobei die Antriebsspule Fokussierspulen (134a, 234a, 334a, 434a), die horizontal zur Linsenaufnahme um die Mitte der Linsenaufnahme gewickelt sind, und Spurverfolgungsspulen (134b, 234b, 334b, 434b) umfasst, die derart um beide Seiten der Linsenaufnahme gewickelt sind, dass sie die Fokussierspulen senkrecht kreuzen.

9. Einrichtung zur Bewegung eines Aufnahmekopfes nach Anspruch 7 oder 8, wobei das Dämpfungsfluid (150, 250, 350, 450) derart auf die Flächen der Magnete aufgetragen ist, dass auf beiden Seiten der Linsenaufnahme ausreichend Kontakt mit der Antriebsspule besteht.

10. Einrichtung zur Bewegung eines Aufnahmekopfes nach Anspruch 2, wobei das Linsenaufnahmeantriebsmittel Folgendes umfasst:
ein Paar erster Magnete (232a, 232b), sich gegenüber angeordnet auf einer oberen Fläche des Basisglieds, voneinander mit einem vorbestimmten Abstand beabstandet;
ein Paar zweiter Magnete (232c, 232d), jeweils an Außenseiten der ersten Magnete angeordnet;
ein Paar Joche (215a, 215b), die hinsichtlich des Basisglieds die ersten und zweiten Magnete stützen und die eine Magnetflussdichte in Richtung einer gewünschten Richtung maximieren und konzentrieren; und
eine Antriebsspule (234), die auf der Linsenaufnahme festgemacht ist und mit den ersten und zweiten Magneten eine elektromagnetische Kraft zum Antrieb der Linsenaufnahme erzeugt, wobei die Linsenaufnahme ein Paar vertikaler Teile aufweist, die Öffnungen (226) zur Aufnahme der Joche und der an den Jochen angebrachten ersten und zweiten Magnete haben.

11. Einrichtung zur Bewegung eines Aufnahmekopfes nach Anspruch 10, wobei die zwei Paare erster (232a, 232b) und zweiter (232c, 232d) Magnete jeweils an Innen- und Außenseitenflächen der Joche (215a, 215b) mit den Jochen zwischen sich angebracht sind.

12. Einrichtung zur Bewegung eines Aufnahmekopfes nach Anspruch 10, wobei die Antriebsspule ein Paar Fokussierspulen (234a), die jeweils horizontal zur Linsenaufnahme gewickelt sind, und eine Spurverfolgungsspule (234b) umfasst, die derart um ein Mittelstück der Linsenaufnahme gewickelt ist, dass sie die Fokussierspulen senkrecht kreuzt.

13. Einrichtung zur Bewegung eines Aufnahmekopfes nach Anspruch 10, wobei das Dämpfungsfluid (250) zwischen die Öffnungen der Linsenaufnahme und den ersten Magneten aufgetragen ist.

14. Einrichtung zur Bewegung eines Aufnahmekopfes nach Anspruch 10 oder 13, wobei das Dämpfungsfluid (250) zwischen die Öffnungen der Linsenaufnahme und den zweiten Magneten aufgetragen ist.

15. Einrichtung zur Bewegung eines Aufnahmekopfes nach Anspruch 3, wobei das Linsenaufnahmeantriebsmittel Folgendes umfasst:
ein Paar erster Magnete (332a, 332b), jeweils angeordnet an beiden Seiten der Welle, wobei sie die Welle des Basisglieds in der Mitte haben, voneinander jeweils mit einem vorbestimmten Abstand beabstandet;
ein Paar zweiter Magnete (332c, 332d), jeweils an Außenseiten der ersten Magnete angeordnet, von den ersten Magneten mit einem vorbestimmten Abstand beabstandet;
ein Paar erster Joche (315a, 315b) und ein Paar zweiter Joche (317a, 317b), die hinsichtlich des Basisglieds die ersten und zweiten Magnete stützen und die eine Magnetflussdichte der ersten und zweiten Magnete in Richtung einer gewünschten Richtung konzentrieren und maximieren; und
eine Antriebsspule (334), die auf der Linsenaufnahme angeordnet ist und die zusammen mit den Magneten eine elektromagnetische Kraft zum Antrieb der Linsenaufnahme erzeugt, wobei
die Linsenaufnahme ein Paar Öffnungen (323a, 323b) zur Aufnahme des Paars erster Joche hat und zusammen mit den an den ersten Jochen angebrachten ersten Magneten.

16. Einrichtung zur Bewegung eines Aufnahmekopfes nach Anspruch 15, wobei die Antriebsspule Folgendes umfasst:
eine Fokussierspule (334a), die um einen Umfang des Wellenlochs der Linsenaufnahme angeordnet ist, während sie einen vorbestimmten Abstand zu den ersten Magneten beibehält; und
ein Paar Spurverfolgungsspulen (334b), die um beide Seiten der Linsenaufnahme angeordnet sind, während sie einen vorbestimmten Abstand zu den zweiten Magneten beibehalten;
wobei die Fokussierspule und die Spurverfolgungsspulen derart gewickelt sind, dass sie einander senkrecht kreuzen.

17. Einrichtung zur Bewegung eines Aufnahmekopfes nach Anspruch 15 oder 16, wobei das Dämpfungsfluid (350) derart auf die Flächen der ersten Magnete aufgetragen ist, dass ausreichend Kontakt mit der Fokussierspule der Linsenaufnahme besteht.

18. Einrichtung zur Bewegung eines Aufnahmekopfes nach Anspruch 15, 16 oder 17, wobei das Dämpfungsfluid (350) derart auf die Flächen der zweiten Magnete aufgetragen ist, dass ausreichend Kontakt mit den Spurverfolgungsspulen der Linsenaufnahme besteht.

19. Einrichtung zur Bewegung eines Aufnahmekopfes nach Anspruch 15, wobei das Dämpfungsfluid (350) zwischen die Öffnungen der Linsenaufnahme und den ersten Jochen aufgetragen ist.

20. Einrichtung zur Bewegung eines Aufnahmekopfes nach Anspruch 19, wobei die ersten Joche ein Blockierteil (319) aufweisen, das das Dämpfungsfluid am Laufen in Richtung der ersten Magnete hindert.

21. Einrichtung zur Bewegung eines Aufnahmekopfes nach Anspruch 3, wobei das Linsenaufnahmeantriebsmittel Folgendes umfasst:
ein Paar erster Joche (415a, 415b), angeordnet an beiden Seiten der Welle, während sie die Welle des Basisglieds in der Mitte haben und voneinander mit einem vorbestimmten Abstand beabstandet sind;
ein Paar zweiter Joche (417a, 417b), die an Außenseiten der ersten Joche angeordnet sind und von denen jedes im Wesentlichen eine halbzylindrische Form hat;
ein Paar erster Magnete (432a, 432b), an den einen Seiten der zweiten Joche sich gegenüber angebracht;
ein Paar zweiter Magnete (432c, 432d), jeweils an den anderen Seiten der zweiten Joche sich gegenüber angebracht; und
eine Antriebsspule (434), die an der Linsenaufnahme angeordnet ist und die zusammen mit den ersten und zweiten Magneten eine elektromagnetische Kraft zum Antrieb der Linsenaufnahme erzeugt, wobei die Linsenaufnahme mindestens ein Paar Öffnungen (423a, 423b) zur Aufnahme der ersten Joche hat.

22. Einrichtung zur Bewegung eines Aufnahmekopfes nach Anspruch 21, wobei die Antriebsspule Folgendes umfasst:
ein Paar Fokussierspulen (434b), angeordnet an beiden Seiten der Linsenaufnahme, während sie einen vorbestimmten Abstand zu den ersten Magneten beibehalten; und
ein Paar Spurverfolgungsspulen (434b), die an beiden Seiten der Linsenaufnahme angeordnet sind, während sie einen vorbestimmten Abstand zu den zweiten Magneten beibehalten, wobei die Fokussierspulen und die Spurverfolgungsspulen derart gewickelt sind, dass sie einander senkrecht kreuzen.

23. Einrichtung zur Bewegung eines Aufnahmekopfes nach Anspruch 21 oder 22, wobei das Dämpfungsfluid (450) derart auf die Flächen der ersten Magnete aufgetragen ist, dass ausreichend Kontakt mit den Fokussierspulen der Linsenaufnahme besteht.

24. Einrichtung zur Bewegung eines Aufnahmekopfes nach Anspruch 21, 22 oder 23, wobei das Dämpfungsfluid (450) derart auf die Flächen der zweiten Magnete aufgetragen ist, dass ausreichend Kontakt mit den Spurverfolgungsspulen der Linsenaufnahme besteht.

25. Einrichtung zur Bewegung eines Aufnahmekopfes nach Anspruch 21, wobei das Dämpfungsfluid (450) zwischen die Öffnungen der Linsenaufnahme und den in den Öffnungen aufgenommenen ersten Jochen aufgetragen ist.

26. Einrichtung zur Bewegung eines Aufnahmekopfes nach Anspruch 25, wobei die ersten Joche ein Blockierteil (419) aufweisen, das das Dämpfungsfluid am Laufen in Richtung der ersten Magnete hindert.

## Revendications

1. Actionneur de tête de lecture d'un dispositif optique, comprenant :
un élément de base (10, 110, 210, 310, 410) ;
un support d'objectif (20, 120, 220, 320, 420) qui est disposé à l'emplacement de l'élément de base afin qu'il puisse être déplacé dans des directions de focalisation et de poursuite, et sur lequel est monté un objectif (22, 122, 222, 322, 422) ;
un moyen d'entraînement de support d'objectif (30, 130, 230, 330, 430) pour entraîner le support d'objectif dans les directions de focalisation et de poursuite ;
dans lequel un fluide d'amortissement (50, 150, 250, 350, 450) est appliqué directement entre l'élément de base ou des parties fixées à l'élément de base et le support d'objectif ou des parties fixées au support d'objectif pour amortir une vibration se produisant à l'emplacement du support d'objectif lorsque le support d'objectif est entraîné par le moyen d'entraînement de support d'objectif à la fois dans les directions de focalisation et de poursuite, **caractérisé en ce que** le fluide d'amortissement a une viscosité dans la gamme de 1000 cP à 2000 cP à 27°C, et contient des matières particulaires magnétiques dispersées de façon stable.

2. Actionneur de tête de lecture selon la revendication 1, dans lequel l'élément de base comprend une partie formant corps (12, 112, 212) et une partie de soutien du support (14, 114, 214) fixée à un côté de la surface supérieure de la partie formant corps, et dans lequel le support d'objectif est suspendu par deux paires de ressorts à fil métallique (24a, 24b, 124a, 124b, 224a, 224b).

3. Actionneur de tête de lecture selon la revendication 1, dans lequel l'élément de base est muni d'un arbre (311, 411) dans sa partie centrale, et le support d'objectif présente un trou d'arbre (321, 421) pour recevoir l'arbre, et le support d'objectif est soutenu par rapport à l'élément de base de manière à s'insérer sur l'arbre à travers le trou d'arbre.

4. Actionneur de tête de lecture selon la revendication 2, dans lequel le moyen d'entraînement de support d'objectif comprend :
une paire d'aimants (32a, 32b) respectivement fixés aux deux côtés du support d'objectif ; et
une bobine d'entraînement (34a, 34b) qui est disposée sur une surface supérieure de l'élément de base afin de maintenir une distance prédéterminée par rapport à la paire d'aimants, et qui engendre une force électromagnétique permettant d'entraîner le support d'objectif en association avec les aimants.

5. Actionneur de tête de lecture selon la revendication 4, dans lequel la bobine d'entraînement comprend une paire de bobines de focalisation (36a, 36b) et une paire de bobines de poursuite (36c, 36d) qui sont enroulées de façon à se croiser perpendiculairement l'une à l'autre.

6. Actionneur de tête de lecture selon la revendication 4 ou 5, dans lequel le fluide d'amortissement (50) est appliqué aux surfaces des aimants afin qu'elles soient suffisamment en contact avec la bobine d'entraînement.

7. Actionneur de tête de lecture selon la revendication 2, 3, 4, 5 ou 6, dans lequel le moyen d'entraînement de support d'objectif comprend :
une paire d'aimants (132a, 132b, 232a, 232b, 332a, 332b, 432a, 432b) disposés sur une surface supérieure de l'élément de base, espacés l'un de l'autre d'une distance prédéterminée ;
une paire de culasses qui soutiennent la paire d'aimants (115a, 115b, 232a, 323b, 332a, 332b, 432a, 432b) par rapport à l'élément de base, et qui rendent maximale et concentrent une densité de flux magnétique des aimants dans une direction souhaitée ; et
une bobine d'entraînement (134a, 134b, 234a, 234b, 334a, 334b, 434a, 434b) qui est disposée sur une surface supérieure du support d'objectif de façon à maintenir une distance prédéterminée par rapport aux aimants et qui engendre une force électromagnétique permettant d'entraîner le support d'objectif en association avec les aimants.

8. Actionneur de tête de lecture selon la revendication 7, dans lequel la bobine d'entraînement comprend des bobines de focalisation (134a, 234a, 334a, 434a) qui sont enroulées autour du centre du support d'objectif de façon horizontale par rapport au support d'objectif, et des bobines d'entraînement (134b, 234b, 334b, 434b) qui sont enroulées autour des deux côtés du support d'objectif de façon à croiser perpendiculairement les bobines de focalisation.

9. Actionneur de tête de lecture selon la revendication 7 ou 8, dans lequel le fluide d'amortissement (150, 250, 350, 450) est appliqué à des surfaces des aimants afin qu'elles soient suffisamment en contact avec la bobine d'entraînement des deux côtés du support d'objectif.

10. Actionneur de tête de lecture selon la revendication 2, dans lequel le moyen d'entraînement de support d'objectif comprend :
une paire de premiers aimants (232a, 232b) disposés sur une surface supérieure de l'élément de base tout en étant tournés l'un vers l'autre et en étant espacés l'un de l'autre d'une distance prédéterminée ;
une paire de deuxièmes aimants (232c, 232d) respectivement disposés sur les faces extérieures des premiers aimants ;
une paire de culasses (215a, 215b) qui soutiennent les premiers et deuxièmes aimants par rapport à l'élément de base, et qui rendent maximale et concentrent une densité de flux magnétique dans une direction souhaitée ; et
une bobine d'entraînement (234) qui est montée sur le support d'objectif et qui engendre une force électromagnétique permettant d'entraîner le support d'objectif en association avec les premiers et deuxièmes aimants, le support d'objectif ayant une paire de parties verticales qui ont des ouvertures (226) pouvant recevoir les culasses et les premiers et deuxièmes aimants fixés aux culasses.

11. Actionneur de tête de lecture selon la revendication 10, dans lequel les deux paires de premiers (232a, 232b) et deuxièmes (232c, 232d) aimants sont respectivement fixées à des surfaces latérales intérieure et extérieure des culasses (215a, 215b), tout en ayant les culasses entre celles-ci.

12. Actionneur de tête de lecture selon la revendication 10, dans lequel la bobine d'entraînement a une paire de bobines de focalisation (234a) respectivement enroulée de façon à être orientée horizontalement par rapport au support d'objectif, et une bobine de poursuite (234b) enroulée autour d'une partie médiane du support d'objectif de façon à croiser perpendiculairement les bobines de focalisation.

13. Actionneur de tête de lecture selon la revendication 10, dans lequel le fluide d'amortissement (250) est appliqué entre les ouvertures du support d'objectif et les premiers aimants.

14. Actionneur de tête de lecture selon la revendication 10 ou 13, dans lequel le fluide d'amortissement (250) est appliqué entre les ouvertures du support d'objectif et les deuxièmes aimants.

15. Actionneur de tête de lecture selon la revendication 3, dans lequel le moyen d'entraînement de support d'objectif comprend :
une paire de premiers aimants (332a, 332b) respectivement disposés des deux côtés de l'arbre, tout en ayant l'arbre de l'élément de base au centre et en étant respectivement espacés d'une distance prédéterminée l'un de l'autre ;
une paire de deuxièmes aimants (332c, 332d) respectivement disposés sur les côtés extérieurs des premiers aimants tout en étant espacés des premiers aimants d'une distance prédéterminée ;
une paire de premières culasses (315a, 315b) et une paire de deuxièmes culasses (317a, 317b) qui soutiennent les premiers et deuxièmes aimants par rapport à l'élément de base, et qui concentrent et rendent maximale une densité de flux magnétique des premiers et deuxièmes aimants dans une direction souhaitée ; et
une bobine d'entraînement (334) qui est disposée sur le support d'objectif et engendre une force électromagnétique en association avec les aimants pour entraîner le support d'objectif, dans lequel
le support d'objectif présente une paire d'ouvertures (323a, 323b) pour recevoir la paire de premières culasses en association avec les premiers aimants fixés aux premières culasses.

16. Actionneur de tête de lecture selon la revendication 15, dans lequel la bobine d'entraînement comprend :
une bobine de focalisation (334a) disposée autour d'une circonférence du trou d'arbre du support d'objectif, tout en maintenant une distance prédéterminée par rapport aux premiers aimants ; et
une paire de bobines de poursuite (334b) disposées autour des deux côtés du support d'objectif tout en maintenant une distance prédéterminée par rapport aux deuxièmes aimants ;
dans lequel la bobine de focalisation et les bobines de poursuite sont enroulées de façon à se croiser perpendiculairement l'une par rapport à l'autre.

17. Actionneur de tête de lecture selon la revendication 15 ou 16, dans lequel le fluide d'amortissement (350) est appliqué à des surfaces des premiers aimants de façon qu'elles soient suffisamment en contact avec la bobine de focalisation du support d'objectif.

18. Actionneur de tête de lecture selon la revendication 15, 16 ou 17, dans lequel le fluide d'amortissement (350) est appliqué à des surfaces des deuxièmes aimants de façon qu'elles soient suffisamment en contact avec les bobines de poursuite du support d'objectif.

19. Actionneur de tête de lecture selon la revendication 15, dans lequel le fluide d'amortissement (350) est appliqué entre les ouvertures du support d'objectif et les premières culasses.

20. Actionneur de tête de lecture selon la revendication 19, dans lequel les premières culasses comportent une partie de blocage (319) pour empêcher le fluide d'amortissement de graviter vers les premiers aimants.

21. Actionneur de tête de lecture selon la revendication 3, dans lequel le moyen d'entraînement de support d'objectif comprend :
une paire de premières culasses (415a, 415b) disposées des deux côtés de l'arbre, tout en ayant l'arbre de l'élément de base au centre, et en étant espacées l'une de l'autre d'une distance prédéterminée ;
une paire de deuxièmes culasses (417a, 417b) qui sont disposées sur des côtés extérieurs des premières culasses et dont chacune présente une forme sensiblement semicylindrique ;
une paire de premiers aimants (432a, 432b) fixés d'un côté des deuxièmes culasses tout en étant tournés l'un vers l'autre ;
une paire de deuxièmes aimants (432c, 432d) respectivement fixés aux autres côtés des deuxièmes culasses, tout en étant tournés l'un vers l'autre ; et
une bobine d'entraînement (434) qui est disposée à l'emplacement du support d'objectif et qui engendre une force électromagnétique en association avec les premiers et deuxièmes aimants permettant d'entraîner le support d'objectif, le support d'objectif ayant au moins une paire d'ouvertures (423a, 423b) pouvant recevoir les premières culasses.

22. Actionneur de tête de lecture selon la revendication 21, dans lequel la bobine d'entraînement comprend :
une paire de bobines de focalisation (434a) disposées des deux côtés du support d'objectif, tout en maintenant une distance prédéterminée par rapport aux premiers aimants ; et
une paire de bobines de poursuite (434b) disposées des deux côtés du support d'objectif, tout en maintenant une distance prédéterminée par rapport aux deuxièmes aimants, dans lequel les bobines de focalisation et les bobines de poursuite sont enroulées de façon à se croiser perpendiculairement l'une à l'autre.

23. Actionneur de tête de lecture selon la revendication 21 ou 22, dans lequel le fluide d'amortissement (450) est appliqué à des surfaces des premiers aimants de façon qu'elles soient suffisamment en contact avec les bobines de focalisation du support d'objectif.

24. Actionneur de tête de lecture selon la revendication 21, 22 ou 23, dans lequel le fluide d'amortissement (450) est appliqué à des surfaces des deuxièmes aimants de façon qu'elles soient suffisamment en contact avec les bobines de poursuite du support d'objectif.

25. Actionneur de tête de lecture selon la revendication 21, dans lequel le fluide d'amortissement (450) est appliqué entre les ouvertures du support d'objectif et les premières culasses reçues dans les ouvertures.

26. Actionneur de tête de lecture selon la revendication 25, dans lequel les premières culasses comportent une partie de blocage (419) empêchant le fluide d'amortissement de graviter vers les premiers aimants.
